# EUROPÄISCHE PATENTSCHRIFT

(11) **EP 3 434 528 B1**
(45) Veröffentlichungstag und Bekanntmachung des Hinweises auf die Patenterteilung: **18.12.2019**
(21) Anmeldenummer: 18185008.2
(22) Anmeldetag: 23.07.2018
(51) Int. Cl.: B60R 13/07, B62D 25/08

(54) **WASSERKASTENABDECKUNG**
COWL COVER
GRILLE D'AUVENT

(30) Priorität: 26.07.2017 DE 102017007068
(43) Veröffentlichungstag der Anmeldung: 30.01.2019
(73) Patentinhaber: AUDI AG, 85045 Ingolstadt (DE)
(72) Erfinder: Cabral Herrera, Pedro Antonio, 08940 Cornella de Llobregat (ES); Vieta Alemany, Xavier, 08029 Barcelona (ES); Fernández Gómez, Antonio, 08800 Vilanova y la Geutrú (ES)

(56) Entgegenhaltungen:
- EP-A1- 2 548 787
- EP-A2- 1 726 514
- DE-U1-202010 013 080
- FR-A1- 2 930 227
- JP-A- 2003 267 263
- JP-A- 2010 023 662
- JP-A- 2010 143 288
- JP-A- 2014 180 974
- JP-U- S6 162 609

## Beschreibung

Die Erfindung betrifft eine Wasserkastenabdeckung für ein Kraftfahrzeug, die ein Eindringen von Schmutz zwischen A-Säule und Kotflügel verhindert.

Die Wasserkastenabdeckung dient in Kraftfahrzeugen dazu, die im Wasserkasten verbauten Komponenten wie Scheibenwischergestänge und Innenraum-Luftfilter vor Feuchtigkeit und Verschmutzung zu schützen. Oberhalb der Wasserkastenabdeckung, die im Regelfall teilweise von einer Frontklappe des Fahrzeugs überragt wird, befinden sich die Scheibenwischerarme.

Aktuelle Modelle einer Wasserkastenabdeckung unter der Frontscheibe verschließen nicht vollständig die Zone zwischen A-Säule und Kotflügel, so dass Schmutz eindringen und sich in diesem Bereich Wasser sammeln kann. Die Folge können Probleme wie Korrosion, sichtbare Verschmutzungen etc. sein. Um die gesamte Zone von der A-Säule bis zum Kotflügel, mit Ausnahme des Scharniers der Fronthaube, zu verschließen, wird in der Regel ein zusätzliches Verschlussteil montiert, was die Herstellkosten erhöht und den Montageprozess auf der Montagelinie verlangsamt. Das Anbringen eines Zusatzteils erhöht die Kosten, erfordert die Durchführung zusätzlicher Prüfvorgänge, erhöht den Arbeitsaufwand und die Planungskosten und verlangsamt den Montageprozess. Außerdem verlangsamt es Ausbau und Wiedereinbau bei Reparaturen oder Wartungsvorgängen.

Aufgabe der Erfindung war es, eine alternative Wasserkastenabdeckung zur Verfügung zu stellen, die ein Eindringen von Schmutz in die Zone zwischen A-Säule und Kotflügel verhindert und einen geringen Montageaufwand erfordert.

Um Verschmutzungen zu vermeiden, schlägt die DE 20 2010 013 080 U1 eine Schutzabdeckung für Kraftfahrzeuge aus einem flachen und flexiblen oder flachen und starren Material mit Befestigungselementen zur Fixierung an einem Fahrzeug vor. Bei bestimmungsgemäßer Benutzung überspannt sie die Scheibenwischer, die Wasserkastenabdeckung und den Bereich, der von der hinteren Stirnkante der Motorhaube, der Windschutzscheibe und den Kotflügeln gebildet wird. Vor Inbetriebnahme des Fahrzeuges wird die Schutzabdeckung durch Abwischen, Abfegen oder Abschütteln von den Verschmutzungen befreit. Eine solche Schutzabdeckung erfordert jedoch vor und nach jeder Fahrt zusätzlichen Arbeitsaufwand, was der Nutzer des Fahrzeugs vermeiden will.

JP S61 62609 U offenbart eine Wasserkastenabdeckung für ein Kraftfahrzeug, welche sich über die Fahrzeugbreite jeweils bis zu den Kotflügelbänken erstreckt und im Bereich mindestens eines Frontklappenscharniers eine Aussparung aufweist. Ein Mittelteil der Wasserkastenabdeckung ist fest mit zwei Seitenteilen verbunden.

Erfindungsgemäß wird die Aufgabe dadurch gelöst, dass die Wasserkastenabdeckung und die zusätzlichen Verschlusselemente als ein einziges Bauteil ausgeführt sind und die Wasserkastenabdeckung und die zusätzlichen Verschlusselemente durch ein dehnbares Scharnier verbunden sind.

Gegenstand der Erfindung ist eine Wasserkastenabdeckung für ein Kraftfahrzeug, welche sich über die Fahrzeugbreite jeweils bis zu den Kotflügelbänken erstreckt und im Bereich mindestens eines Frontklappenscharniers eine Aussparung aufweist. In einer Ausführungsform weist die Wasserkastenabdeckung zwei Aussparungen auf, in denen nach der Montage zwei Scharniere einer Frontklappe des Kraftfahrzeugs, z.B. einer Motorhaube, positioniert sind. Die Wasserkastenabdeckung dichtet nach der Montage auf beiden Seiten des Fahrzeugs jeweils den Bereich zwischen A-Säule und Kotflügel ab.

Die Wasserkastenabdeckung umfasst ein Mittelteil und zwei Seitenteile, die jeweils mit dem Mittelteil fest verbunden sind. Jedes Seitenteil ist über ein dehnbares Scharnier mit dem Mittelteil verbunden. In einer Ausführungsform ist das Scharnier elastisch. Die Scharniere erleichtern die Montage der Wasserkastenabdeckung, da sich beim Einpassen der Wasserkastenabdeckung die Seitenteile besser an die Frontklappenscharniere anpassen lassen, damit durch Zusammenwirken des Mittelteils und der Seitenteile die Zone zwischen A-Säule und Kotflügel dicht verschlossen wird.

In einer Ausführungsform weist das Mittelteil mindestens ein von einem Randbereich umgebenes Gitter auf bzw. eine Reihe von Durchbrechungen, die gitterartig angeordnet sind. Durch das Gitter kann Wasser, z.B. Regenwasser oder Scheibenwischflüssigkeit, in den Wasserkasten ablaufen. Das Gitter kann durchgehend ausgeführt sein oder auch geteilt sein. In einer Ausführungsform der Wasserkastenabdeckung schließt der Randbereich an einer Längsseite des Mittelteils an die Unterkante der Frontscheibe des Kraftfahrzeugs an, an beiden Querseiten an Scharniere einer Frontklappe.

In einer Ausführungsform ist die Wasserkastenabdeckung als Integralbauteil ausgeführt, d.h. sie besteht aus einem einzigen Stück, welches sämtliche Funktionselemente enthält. In einer Ausführungsform ist die Wasserkastenabdeckung durch Spritzguss hergestellt. In einer weiteren Ausführungsform ist die Wasserkastenabdeckung ein Hybridbauteil, zu dessen Herstellung die Einlegeteile, z.B. Scharniere und/oder Gitter mit Kunststoff umspritzt werden.

In einer Ausführungsform enthält die Wasserkastenabdeckung mindestens ein thermoplastisches Polymer, beispielsweise ein Polyamid (PA), Polypropylen (PP) oder thermoplastisches Polyurethan (TPU). In einer weiteren Ausführungsform enthält die Wasserkastenabdeckung mindestens ein Elastomer, beispielsweise BR, ABS oder TPU. In einer weiteren Ausführungsform enthält die Wasserkastenabdeckung mindestens ein Verbundmaterial, welches eine Verstärkungskomponente wie Kohlefaser, Kevlar oder Fiberglas enthält.

Zu den Vorteilen der erfindungsgemäßen Wasserkastenabdeckung zählt, dass nach ihrer Montage die Öffnung zwischen A-Säule und Kotflügel völlig verschlossen und dadurch Schmutzfreiheit sichergestellt ist. Da es sich um ein einziges integrales Bauteil handelt, müssen keine zusätzlichen Prüfungen vorgesehen werden, und der Arbeitsaufwand bei Entwicklung, Test und Montage ist geringer. Die erfindungsgemäße Wasserkastenabdeckung spart Kosten ein und steigert die Effizienz des Montageprozesses.

Eine Ausführungsform der Erfindung ist in den Zeichnungen schematisch dargestellt und wird unter Bezugnahme auf die Zeichnungen weiter beschrieben. Es zeigt:
- Figur 1: eine schematische Darstellung einer Wasserkastenabdeckung und eines Zusatzteil gemäß dem Stand der Technik;
- Figur 2: zeigt eine schematische Darstellung einer Ausführungsform der erfindungsgemäßen Wasserkastenabdeckung.

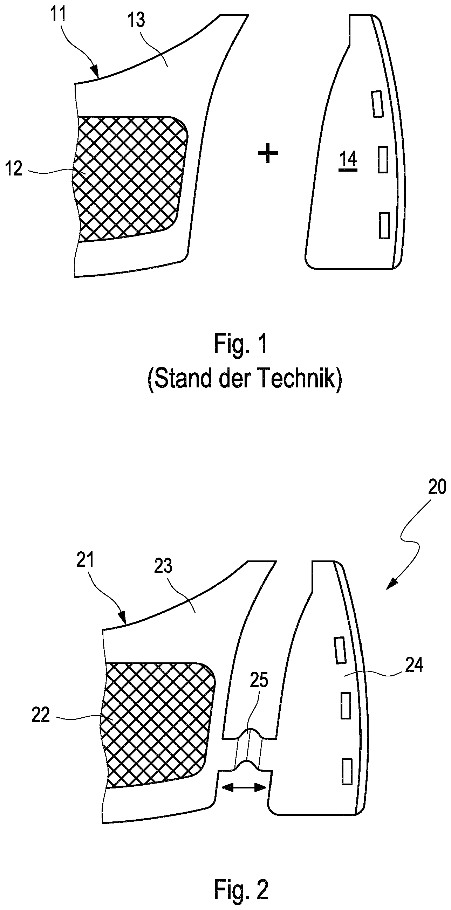

Figur 1 zeigt einen Ausschnitt einer Wasserkastenabdeckung 11 und ein Zusatzteil 14 gemäß dem Stand der Technik. Die Wasserkastenabdeckung 11 weist ein Gitter 12 und einen Randbereich 13 auf, der sich in montiertem Zustand zwischen den Scharnieren einer Frontklappe des Fahrzeugs befindet und an der Unterkante der Frontscheibe des Fahrzeugs anschließt. Je ein Zusatzteil 14 befindet sich an der Außenseite der beiden Scharniere der Frontklappe im Kotflügel. Bei der Montage wird zunächst die Wasserkastenabdeckung 11 montiert. In separaten Montageschritten müssen Zusatzteile 14 montiert werden, um die Bereiche zwischen den A-Säulen und den Kotflügeln des Fahrzeugs abzudichten.

Figur 2 zeigt schematisch einen Ausschnitt einer Ausführungsform der erfindungsgemäßen Wasserkastenabdeckung 20. Auch die Wasserkastenabdeckung 20 weist ein Gitter 22 und einen Randbereich 23 auf, der sich in montiertem Zustand zwischen den Scharnieren einer Frontklappe des Fahrzeugs befindet und an der Unterkante der Frontscheibe des Fahrzeugs anschließt. Auf beiden Seiten befinden sich Seitenteile 24, die über Scharniere 25 mit dem Mittelteil 21 der Wasserkastenabdeckung 20 verbunden sind. In der gezeigten Ausführungsform sind die Scharniere 25 dehnbar (angedeutet durch den Pfeil), so dass bei der Montage die Seitenteile 24 ohne Probleme positioniert werden können. Randbereich 23, Seitenteil 24 und Scharnier 25 sind nach der Montage um ein Frontklappenscharnier des Fahrzeugs angeordnet und Randbereich 23 und Seitenteile 24 wirken zusammen, um die Bereiche zwischen den A-Säulen und den Kotflügeln des Fahrzeugs abzudichten.

### Bezugszeichenliste

- 11: Wasserkastenabdeckung
- 12: Gitter
- 13: Randbereich
- 14: Zusatzteil
- 20: Wasserkastenabdeckung
- 21: Mittelteil
- 22: Gitter
- 23: Randbereich
- 24: Seitenteil
- 25: Scharnier

## Patentansprüche

1. Wasserkastenabdeckung (20) für ein Kraftfahrzeug, welche sich über die Fahrzeugbreite jeweils bis zu den Kotflügelbänken erstreckt und im Bereich mindestens eines Frontklappenscharniers eine Aussparung aufweist, wobei die Wasserkastenabdeckung (20) ein Mittelteil (21) und zwei mit dem Mittelteil (21) fest verbundene Seitenteile (24) aufweist, **dadurch gekennzeichnet, dass** die beiden Seitenteile (24) jeweils über ein dehnbares Scharnier (25) mit dem Mittelteil (21) fest verbunden sind.

2. Wasserkastenabdeckung (20) gemäß Anspruch 1, bei dem das Scharnier (25) elastisch ist.

3. Wasserkastenabdeckung (20) gemäß Anspruch 1 oder 2, bei der das Mittelteil (21) mindestens ein von einem Randbereich (23) umgebenes Gitter (22) aufweist.

4. Wasserkastenabdeckung (20) gemäß einem der voranstehenden Ansprüche, welche als Integralbauteil ausgeführt ist.

5. Wasserkastenabdeckung (20) gemäß einem der voranstehenden Ansprüche, welche mindestens ein thermoplastisches Polymer enthält.

6. Wasserkastenabdeckung (20) gemäß einem der voranstehenden Ansprüche, welche mindestens ein Elastomer enthält.

7. Wasserkastenabdeckung (20) gemäß einem der voranstehenden Ansprüche, welche durch Spritzguss hergestellt ist.

## Claims

1. Water tank cover (20) for a motor vehicle, which extends over the vehicle width up to the wing beds respectively and has a recess in the region of at least one bonnet hinge, wherein the water tank cover (20) has a central part (21) and two side parts (24) firmly connected to the central part (21), **characterised in that** the two side parts (24) are firmly connected to the central part (21) via a flexible hinge (25) respectively.

2. Water tank cover (20) according to claim 1, in which the hinge (25) is elastic.

3. Water tank cover (20) according to claim 1 or 2, in which the central part (21) has at least one grid (22) surrounded by an edge region (23).

4. Water tank cover (20) according to any one of the preceding claims, which is implemented as an integral component.

5. Water tank cover (20) according to any one of the preceding claims, which contains at least one thermoplastic polymer.

6. Water tank cover (20) according to any one of the preceding claims, which contains at least one elastomer.

7. Water tank cover (20) according to any one of the preceding claims, which is produced by injection moulding.

## Revendications

1. Grille d'auvent (20) pour un véhicule automobile, laquelle s'étend sur la largeur de véhicule respectivement jusqu'aux bancs de garde-boue et présente un évidement dans la zone d'au moins une charnière de capot, dans laquelle la grille d'auvent (20) présente une partie médiane (21) et deux parties latérales (24) reliées solidement à la partie médiane (21), **caractérisée en ce que** les deux parties latérales (24) sont reliées solidement à la partie médiane (21) respectivement par le biais d'une charnière extensible (25).

2. Grille d'auvent (20) selon la revendication 1, dans laquelle la charnière (25) est élastique.

3. Grille d'auvent (20) selon la revendication 1 ou 2, dans laquelle la partie médiane (21) présente au moins une grille (22) entourée par une zone de bord (23).

4. Grille d'auvent (20) selon l'une quelconque des revendications précédentes, laquelle est réalisée sous la forme d'un composant intégré.

5. Grille d'auvent (20) selon l'une quelconque des revendications précédentes, laquelle contient au moins un polymère thermoplastique.

6. Grille d'auvent (20) selon l'une quelconque des revendications précédentes, laquelle contient au moins un élastomère.

7. Grille d'auvent (20) selon l'une quelconque des revendications précédentes, laquelle est fabriquée par moulage par injection.
